(19) Europäisches Patentamt
European Patent Office
Office européen des brevets

(11) **EP 3 703 463 B1**

(12) **FASCICULE DE BREVET EUROPEEN**

(45) Date de publication et mention
de la délivrance du brevet:
**20.07.2022 Bulletin 2022/29**

(21) Numéro de dépôt: **20159178.1**

(22) Date de dépôt: **25.02.2020**

(51) Classification Internationale des Brevets (IPC):
**H04W 76/15** *(2018.01)* **H04W 72/02** *(2009.01)*
**H04W 72/08** *(2009.01)*

(52) Classification Coopérative des Brevets (CPC):
**H04W 76/15; H04W 72/02;** H04W 72/087

(54) **MÉTHODE D'ACCÈS PAR LIAISON MULTIPLE À UN RÉSEAU**

ZUGRIFFSMETHODE DURCH MEHRFACHVERBINDUNG MIT EINEM NETZ

METHOD FOR ACCESS BY MULTIPLE CONNECTION TO A NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.02.2019 FR 1902085**

(43) Date de publication de la demande:
**02.09.2020 Bulletin 2020/36**

(73) Titulaire: **Commissariat à l'énergie atomique
et aux énergies alternatives
75015 Paris (FR)**

(72) Inventeurs:
• **DI PIETRO, Nicola**
  **38054 Grenoble Cedex 9 (FR)**
• **CALVANESE STRINATI, Emilio**
  **38054 Grenoble Cedex 9 (FR)**

(74) Mandataire: **Brevalex
56, Boulevard de l'Embouchure
B.P. 27519
31075 Toulouse Cedex 2 (FR)**

(56) Documents cités:
**EP-A1- 1 798 874     US-A1- 2016 323 900**

• **BARBAROSSA SERGIO ET AL: "Enabling
effective Mobile Edge Computing using
millimeterwave links", 2017 IEEE
INTERNATIONAL CONFERENCE ON
COMMUNICATIONS WORKSHOPS (ICC
WORKSHOPS), IEEE, 21 mai 2017 (2017-05-21),
pages 367-372, XP033111496, DOI:
10.1109/ICCW.2017.7962685**

EP 3 703 463 B1

**Description**

**DOMAINE TECHNIQUE**

La présente invention concerne essentiellement le domaine des réseaux MEC *(Mobile Edge Computing),* plus particulièrement les réseaux cellulaires hétérogènes (HetNets) de la génération 4G, 5G et au-delà.

**ÉTAT DE LA TECHNIQUE ANTÉRIEURE**

Le déport des calculs vers la périphérie du réseau, dénommé MEC *(Mobile Edge Computing)* est l'une des caractéristiques essentielles des futurs réseaux de télécommunication mobile 5G. Cette technique permet de fournir à un terminal mobile des capacités de calcul en nuages *(Cloud Computing)* au sein même du réseau d'accès ou RAN *(Radio Access Network).* Un réseau offrant cette possibilité de calcul déporté (réseau MEC) possède des points d'accès radio ou RAP *(Radio Access Points)* pouvant accéder rapidement, localement ou via le réseau de backhaul, à d'importantes ressources de calcul, de stockage et de cache. Ainsi, un terminal mobile pourra se décharger de l'exécution de certaines tâches *(computation offloading)* gourmandes en ressources de calcul, telles que celles intervenant dans des applications de réalité augmentée, de sécurité distribuée, etc.

Toutefois, le déport de calculs vers le réseau MEC crée une charge considérable de trafic dans le réseau, notamment sur la voie montante, puisque le terminal doit alors transmettre les données à traiter au point d'accès auquel il est associé. En outre, un grand nombre d'applications, en particulier celles devant s'exécuter en temps réel, requièrent une faible latence de calcul (intervalle de temps séparant l'envoi des données et la réception du résultat de calcul par le terminal). Il en résulte des contraintes sévères, le plus souvent ponctuelles, sur le débit minimum à assurer sur la voie montante.

Une autre caractéristique importante des réseaux 5G est leur caractère hétérogène. Un réseau hétérogène ou HetNet est composé de plusieurs niveaux *(tiers)* de cellules ayant différentes tailles : macrocellules *(macrocells)* et petites cellules *(small cells).* Alors que les stations de base des macrocellules ou MBSs *(Macrocell Base Stations)* assurent une couverture continue aux utilisateurs comme dans un réseau cellulaire conventionnel, les stations de base des petites cellules ou SBSs *(Small cell Base Stations)* permettent d'offrir localement des débits élevés. Les stations de base SBSs offrent en outre un accès multi-technologie ou multi-RAT *(multi-Radio Access Technology)* au sens où un terminal mobile peut s'associer à une SBS soit dans une bande conventionnelle sub-6GHz, (comme pour une MBS), soit dans la bande millimétrique.

Pour augmenter son débit sur la voie montante et réduire la latence de calcul, un terminal mobile peut se connecter simultanément à plusieurs SBSs dans la bande millimétrique en formant des faisceaux dans plusieurs directions. Plus précisément, les paquets de données à transmettre sont divisés en sous-paquets qui sont transmis via des faisceaux distincts. Les différents sous-paquets sont ensuite concaténés par le réseau (par exemple l'une des stations SBS) avant d'être transmis au serveur de calcul.

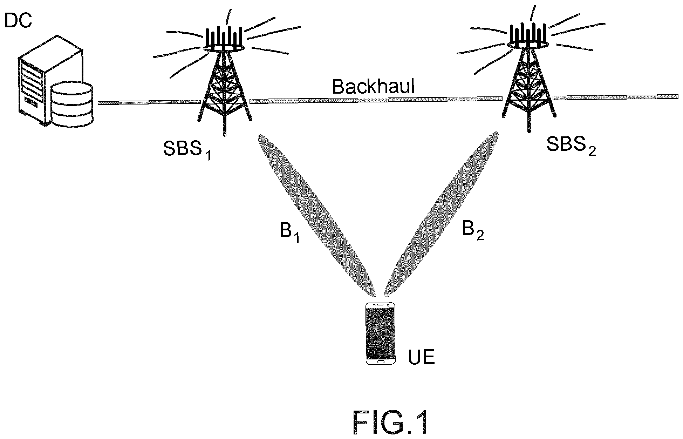

La Fig. 1 représente schématiquement une liaison multiple à un réseau MEC selon une méthode d'accès connue de l'état de la technique. Le terminal mobile UE est doté d'une pluralité d'antennes en émission (réseau d'antennes d'un système MIMO) et génère une pluralité de faisceaux (ici $B_1$, $B_2$) pointant dans des directions où se trouvent plusieurs points d'accès radio (ici, les stations de bases $SBS_1$ et $SBS_2$). Les stations de base $SBS_1$ et $SBS_2$ sont ici reliées par le réseau de backhaul mais elles peuvent alternativement être reliées au moyen d'un réseau par sauts. Les sous-paquets transmis via les faisceaux $B_1$ et $B_2$ sont concaténés par la station de base maîtresse $SBS_1$ et le paquet résultant est transmis via le réseau de backhaul à un serveur de calcul (ou datacenter), DC.

Une telle stratégie d'accès simultané à plusieurs stations SBSs d'un réseau MEC a été proposée dans l'article de S. Barbarossa et al. intitulé « Enabling effective mobile edge computing using millimeter wave links », Proc. of IEEE International Conférence on Communications Workshops (ICC Workshops), 21-25 mai 2017, pp. 1-6. La stratégie qui γ est exposée vise à minimiser la puissance consommée par le terminal mobile tout en vérifiant une contrainte de latence de calcul.

Toutefois, l'article susmentionné ne fournit qu'une approche statistique prenant en compte des probabilités de blocage des liaisons avec les différents points d'accès. Elle ne donne notamment pas de règle pratique permettant de sélectionner le nombre et l'identité des points d'accès pour établir une liaison multiple avec le réseau MEC, lorsqu'une contrainte de débit minimal doit être observée sur la voie montante.

Le but de la présente invention est par conséquent de proposer une méthode d'accès à un réseau, notamment à un réseau MEC, permettant de sélectionner de manière pratique le nombre et l'identité des points d'accès avec lesquels un terminal mobile doit établir une liaison multiple, de sorte à minimiser sa puissance consommée tout en observant une contrainte de qualité de service libellée en termes de débit minimal sur la voie montante.

**EXPOSÉ DE L'INVENTION**

La présente invention est définie dans la revendication 1 par une méthode d'accès d'un terminal d'utilisateur à un réseau comprenant une pluralité de points d'accès, ledit terminal pouvant établir une liaison multiple sur la voie montante avec une pluralité $N$ de tels points d'accès au moyen d'une même pluralité de canaux de transmission, dans laquelle, lorsque le terminal souhaite obtenir une qualité de service s'exprimant sous la forme d'un débit binaire minimal, $R_{min}$, sur la voie montante, celui-ci :

- obtient un indicateur de qualité de canal, $a_i$, pour chaque canal $L_i$ de transmission de ladite pluralité, les canaux de transmission étant indexés par niveau de qualité décroissante à partir de leurs indicateurs de qualité respectifs ;
- détermine un nombre optimal de canaux de transmission, pour transmettre ledit débit binaire minimal, ledit nombre optimal étant obtenu comme le plus petit entier $N^* \leq N$ vérifiant $R_{min} / B \leq \rho - N^* \log_2 (a_{N*+1})$, où $\rho = \sum_{j=1}^{N^*} \log_2 (a_j)$ et sélectionne les canaux de transmission $L_1,...,L_{N*}$ correspondant à ce nombre optimal et où B est la largeur de bande utilisée pour la transmission ;
- pour chacun des canaux de transmission sélectionnés à l'étape précédente, $L_i$, $i=1,...,N^*$, détermine un débit binaire, $R_i$, au moyen de $\overline{R}+B \log_2(a_i)$ avec $\overline{R} = \frac{1}{N^*}(R_{min} - B\rho)$ et en déduit une puissance minimale, $p_i$, capable d'acheminer le débit binaire $R_i$ sur ce canal ;
- lorsque la somme des puissances minimales sur les différents canaux est inférieure à une puissance maximale prédéterminée, transmet en parallèle des données binaires en les répartissant sur les différents canaux de transmission sélectionnés $L_1,...,L_{N*}$ respectivement avec les débits $R_i$, et les puissances $p_i$, $i=1,...,N^*$, précédemment déterminées .

Selon un premier exemple de réalisation, les indicateurs de qualité des canaux de transmission $L_i$, $i = 1,..., N$, sont obtenus par $a_i = \frac{|h_i|^2}{\sigma_{n,i}^2}$ où $|h_i|^2$ est la valeur propre la plus élevée de $\mathbf{H}_i \mathbf{H}_i^H$, où $\mathbf{H}_i$ est la matrice du canal de transmission $L_i$ et $\sigma_{n,i}^2$ est la puissance de bruit affectant le canal $L_i$.

Selon un second exemple de réalisation, les indicateurs de qualité des canaux de transmission $L_i$, $i=1,..., N$, sont obtenus par $a_i = \frac{a}{\sigma_{n,i}^2} \left( \frac{d_i}{d_{ref}} \right)^{-\alpha}$ où $d_i$ est la distance séparant le terminal du point d'accès sur le canal de transmission $L_i$, $\sigma_{n,i}^2$ est la puissance de bruit affectant le canal $L_i$, $d_{ref}$ est une distance de référence, $\alpha$ est un réel positif dépendant du type d'environnement du point d'accès et $a$ est un coefficient positif.

Dans tous les cas, les indicateurs de qualité des canaux de transmission peuvent être préalablement pondérés par les probabilités de blocage respectif de ces canaux.

Selon un troisième exemple de réalisation, le terminal mesure les niveaux de puissance des signaux reçus des points d'accès de ladite pluralité et les transmet au réseau, et que le réseau détermine, à partir de ces niveaux de puissance, les indicateurs de qualité des canaux de transmissions $L_i$, $i = 1,...., N$ , entre le terminal et les différents points d'accès.

Dans un cas typique d'application, le réseau peut être un réseau MEC comportant un serveur de calcul et le terminal diffuse au réseau une requête d'exécution d'une tâche calculatoire avec un temps de latence de calcul maximal $T_c$. Le débit binaire minimal, $R_{min}$, sur la voie montante est alors déterminé par $R_{min} = \frac{n_b}{(T_c - D_{rx} - w/f_s)}$ où $n_b$ est le nombre de bits à transmettre par le terminal sur la voie montante pour l'exécution de la tâche calculatoire, $w$ est le nombre de cycles de calcul requis pour l'exécution de la tâche, $f_s$ est la puissance de calcul dudit serveur et $D_{rx}$ est le temps nécessaire pour transmettre le résultat de la tâche calculatoire au terminal sur la voie descendante

Dans une variante, seuls les points d'accès pouvant prendre en charge ladite requête d'exécution renvoient un accusé de réception au terminal, ladite pluralité $N$ de points d'accès étant alors constituée par ceux dont les accusés de réception ont été reçus par le terminal.

Le terminal répartit alors le paquet de $n_b$ bits à transmettre sur la voie montante sur chacun des canaux de transmission $L_i$, $i = 1,.., N^*$, chaque canal de transmission $L_i$ transmettant en parallèle un sous-paquet de taille

$$n_i = n_b . \frac{R_i}{R_{min}} .$$

Dans un cas typique d'application, le réseau est un réseau hétérogène comprenant des macrocellules et des petites cellules, que les points d'accès sont des stations de base desdites petites cellules opérant dans la bande millimétrique.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1, déjà décrite, représente de manière schématique une liaison multiple à un réseau MEC selon une méthode d'accès connue de l'état de la technique ;
La Fig. 2 illustre graphiquement des zones de choix de liaison simple ou de liaison double à un réseau MEC en fonction des indicateurs de qualité de deux canaux de transmission à deux points d'accès ;
La Fig. 3 représente l'ordinogramme d'une méthode d'accès à un réseau au moyen d'une liaison multiple, selon un mode de réalisation de l'invention.

## EXPOSÉ DÉTAILLÉ DE MODES DE RÉALISATION PARTICULIERS

Nous supposerons dans la suite qu'un terminal mobile souhaite établir un accès avec un réseau, notamment avec un réseau MEC tel que décrit dans la partie introductive. Le réseau comprend une pluralité de points d'accès au moyen desquels le terminal mobile peut établir une liaison multiple avec le réseau. De manière générale, ces points d'accès peuvent être des stations de base de macrocellules, des relais, des stations de base de petites cellules (femtocellules, picocellules etc.) et peuvent faire appel à différentes technologies d'accès. Sans perte de généralité, nous supposerons dans la suite que les points d'accès (APs) sont des stations de petites cellules SBSs opérant dans la gamme millimétrique. Chaque point d'accès est connecté, directement ou indirectement, à au moins un serveur de calcul et/ou de stockage pouvant effectuer un calcul ou retrouver le résultat d'un calcul précédemment effectué. Ce serveur est avantageusement situé en périphérie du réseau, dans le réseau d'accès radio ou RAN *(Radio Access Network)*.

Le scénario envisagé dans le cadre de la présente invention est typiquement celui d'une application du terminal mobile requérant une qualité de service s'exprimant sous la forme d'un débit binaire minimal, $R_{min}$, sur la voie montante. Une telle situation se rencontre par exemple lorsque le terminal souhaite faire effectuer une tâche par le réseau *(computation offloading)* dans le respect d'une latence de calcul.

Plus précisément, si l'on note $T_c$ la latence de calcul à respecter, $n_b$ le nombre de bits que le terminal mobile doit transférer au réseau MEC pour lui faire effectuer la tâche en question, w le nombre de cycles de CPU pour effectuer la tâche, $f_s$ la puissance de calcul (exprimée en nombres de cycles CPU/s) du serveur effectuant la tâche, et $D_{rx}$ le temps nécessaire pour que le résultat du calcul soit retourné par le serveur au terminal mobile sur la voie descendante, le débit binaire sur la voie montante, $R$ (en bits/s), doit vérifier la contrainte :

$$\frac{n_b}{R} + \frac{w}{f_s} + D_{rx} \leq T_c \qquad (1)$$

autrement dit $R \geq R_{min}$ avec $R_{min} = \dfrac{n_b}{(T_c - D_{rx} - w/f_s)} .$

Lorsque la liaison avec le point d'accès courant ne présente pas la capacité suffisante pour acheminer le débit binaire sur la voie montante, $R_{min}$, une première possibilité est d'augmenter la puissance d'émission du terminal pour obtenir un rapport signal sur bruit plus élevé et donc une plus grande capacité de canal. Une autre possibilité, non exclusive de la première est d'établir une seconde liaison avec un autre point d'accès du réseau pour transmettre une fraction du débit binaire.

De manière générale, le terminal mobile souhaitant observer une contrainte de qualité de service s'exprimant sous la forme d'un débit minimal, $R_{min}$, devant être respecté sur la voie montante pourra faire appel à un nombre $N$ de liaisons avec des points d'accès environnants tout en minimisant la puissance d'émission sur l'ensemble de ces liaisons. Si l'on note $L_i$, $i = 1,..., N$ les canaux de transmission pouvant être établis entre le terminal mobile UE et les différents points d'accès, et l'on suppose qu'il n'existe pas d'interférence entre les faisceaux reçus, le problème d'optimisation revient à rechercher la distribution de puissance dans les $N$ directions de faisceau, telle que : $N$ la puissance totale de transmission

$$\sum_{i=1}^{N} Tr\left(\mathbf{Q}_i\right) \text{ soit minimale} \qquad (2\text{-}1)$$

avec les contraintes :

$$\sum_{i=1}^{N} R\left(\mathbf{Q}_i\right) \geq R_{\min} \text{ où } R\left(\mathbf{Q}_i\right) = B\log_2 \det\left(\mathbf{I}_{N_R} + \mathbf{H}_i\mathbf{Q}_i\mathbf{H}_i^H \Sigma_{n,i}^{-1}\right) \qquad (2\text{-}2)$$

$$0 < \sum_{i=1}^{N} Tr\left(\mathbf{Q}_i\right) \leq P_T^{\max} \qquad (2\text{-}3)$$

où $\mathbf{Q}_i = \left(p_i/N_T\right)\mathbf{F}_i\mathbf{F}_i^H$ est la matrice de covariance des symboles émis dans la direction du faisceau $i$, $p_i$ est la puissance avec laquelle on émet les symboles sur le canal de transmission $L_i$, et $F_i$ est la matrice de précodage (matrice unitaire de taille $N_T \times N_T$) permettant de générer le faisceau de direction $i$, $B$ est la largeur de bande utilisée pour la transmission, $R(Q_i)/B$ est la capacité du canal de transmission $L_i$, $I_{NT}$ est la matrice unité de taille $N_T \times N_T$, $H_i$ est la matrice de taille $N_R \times N_T$ du canal de transmission $L_i$ où $N_T$ est le nombre d'antennes du terminal UE et $N_R$ est le nombre d'antennes de chaque point d'accès (le nombre d'antennes est supposé identique quel que soit le point d'accès), $\Sigma_{n,i}$ est la matrice de covariance du bruit sur le canal de transmission $L_i$ et $P_T^{\max}$ est la puissance maximale d'émission du terminal mobile dans la bande B .

La matrice de précodage $F_i$ est choisie égale à $V_i$ où $\mathbf{H}_i = \mathbf{U}_i\mathbf{D}_i\mathbf{V}_i^H$ est la décomposition en valeurs singulières de la matrice de canal $H_i$ ( $U_i$ et $V_i$ sont des matrices unitaires et $D_i$ est une matrice diagonale). De manière duale, le point d'accès (destinataire du canal de transmission $L_i$ ) formera un faisceau en réception en multipliant le vecteur des signaux reçus par la matrice $\mathbf{U}_i^H$ .

En définitive, le problème d'optimisation consiste à effectuer une allocation de puissance des différents faisceaux de manière à respecter les conditions (2-1), (2-2), (2-3), étant entendu qu'une puissance nulle correspond à un faisceau non utilisé. Le nombre de faisceaux utilisés, autrement dit le nombre de points d'accès intervenant dans la liaison multiple, sera noté dans la suite $N^*$ (avec $N^* \leq N$).

Les expressions (2-1), (2-2), (2-3) sont valables tant que les canaux de transmission entre le terminal mobile et les différents points d'accès ne sont pas interférents. Cette condition sera réalisée lorsque les canaux en question sont de type mono-trajet et à plus forte raison si ces trajets sont en ligne directe (LOS). Cette condition est réalisée, dans le contexte précédemment évoqué, en raison de la forte directivité des faisceaux dans la bande millimétrique. Les matrices de canal $H_i$ se réduisent alors à une valeur scalaire complexe, $h_i$, et les conditions (2-1), (2-2), (2-3) deviennent respectivement : minimisation de la puissance totale de transmission

$$P_T = \sum_{i=1}^{N} p_i \qquad (3\text{-}1)$$

avec les contraintes :

$$\sum_{i=1}^{N} R_i \geq R_{\min} \quad \text{où} \quad R_i = B \log_2 \left( 1 + \frac{|h_i|^2 \, p_i}{\sigma_{n,i}^2} \right) \tag{3-2}$$

$$0 < \sum_{i=1}^{N} p_i \leq P_T^{\max} \tag{3-3}$$

On notera dans la suite $a_i = \frac{|h_i|^2}{\sigma_{n,i}^2}$ , $a_i$ est un indicateur de la qualité du canal de transmission $L_i$, puisqu'il représente le facteur multiplicatif de la puissance $p_i$ dans le rapport signal sur bruit. L'indicateur $a_i$ est homogène à l'inverse d'une puissance.

La stratégie d'accès sera tout d'abord exposée dans le cas de deux points d'accès, AP1 et AP2 avec lesquels le terminal mobile UE peut établir des liaisons. Nous supposerons que le canal $L_1$ est de meilleure ou de même qualité que le canal $L_2$, autrement dit que $a_1 \geq a_2$.

Les puissances d'émission $p_1, p_2$ nécessaires pour acheminer les débits $R_1, R_2$ sont données par :

$$p_1 = \frac{2^{r_1} - 1}{a_1} \quad \text{et} \quad p_2 = \frac{2^{r_2} - 1}{a_2} \tag{4}$$

où $r_1 = R_1 / B$ et $r_2 = R_2/B$ sont les débits d'information (en shannons/s) sur les deux canaux de transmission.

Si l'on se contente de transmettre le débit minimal $R_{\min} = R_1 + R_2$ et si l'on note $r_{\min} = R_{min} / B$ la capacité minimale du canal de transmission composite $L = L_1 \, \& \, L_2$ pour acheminer le débit binaire $R_{\min}$, $r_1$, $r_2$ vérifient $r_1 + r_2 = r_{\min}$ et la puissance totale à minimiser est donnée par :

$$P_T = \frac{2^{r_1} - 1}{a_1} + \frac{2^{r_{\min} - r_1} - 1}{a_2} = \left( \frac{2^{r_1}}{a_1} + \frac{2^{r_{\min} - r_1}}{a_2} \right) - \left( \frac{a_1 + a_2}{a_1 a_2} \right) \tag{5}$$

La puissance totale est minimale lorsque les termes $\dfrac{2^{r_1}}{a_1}$ et $\dfrac{2^{r_{\min} - r_1}}{a_2}$ sont égaux, autrement dit si :

$$R_1 = \frac{R_{\min}}{2} + \frac{B}{2} \log_2 \left( \frac{a_1}{a_2} \right) \tag{6-1}$$

$$R_2 = \frac{R_{\min}}{2} + \frac{B}{2} \log_2 \left( \frac{a_2}{a_1} \right) \tag{6-2}$$

On notera que ces débits ne sont tous deux définis que si

$$2^{R\min/B} \geq \max \left( \frac{a_1}{a_2}, \frac{a_2}{a_1} \right) = \frac{a_1}{a_2} \, .$$

Dans ce cas, les puissances respectives à transmettre sur les deux canaux de transmission $L_1, L_2$ sont données par :

$$p_1 = \left( \frac{2^{r_1} - 1}{a_1} \right) = \sqrt{\frac{2^{R_{\min}/B}}{a_1 a_2}} - \frac{1}{a_1} \qquad \qquad (7\text{-}1)$$

$$p_2 = \left( \frac{2^{r_2} - 1}{a_2} \right) = \sqrt{\frac{2^{R_{\min}/B}}{a_1 a_2}} - \frac{1}{a_2} \qquad \qquad (7\text{-}2)$$

et donc la puissance totale :

$$P_T = 2 \left( \frac{2^{R_{\min}/B}}{a_1 a_2} \right)^{1/2} - \left( \frac{1}{a_1} + \frac{1}{a_2} \right) \qquad \qquad (8)$$

La transmission ne peut avoir lieu que si $P_T \leq P_T^{\max}$ .

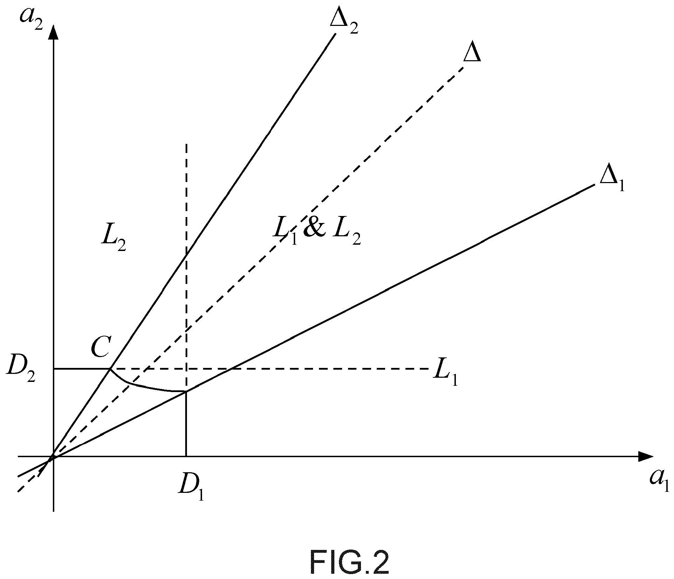

La Fig. 2 illustre graphiquement la stratégie d'accès à un réseau MEC en fonction des indicateurs de qualité $a_1, a_2$ des deux canaux de transmission $L_1, L_2$.

On a représenté en abscisses l'indicateur de qualité $a_1$ du canal $L_1$ et en ordonnées l'indicateur de qualité $a_2$ du canal $L_2$ . La droite $\Delta_1$ est d'équation $a_2 = a_1 2^{-R_{\min}/B}$ et la droite $\Delta_2$ est d'équation $a_2 = a_1 2^{R_{\min}/B}$.

Si les indicateurs de qualité sont tels que $a_2 \leq a_1 2^{-R_{\min}/B}$ (zone au-dessous de la droite $\Delta_1$ et incluant cette dernière ) autrement dit si $2^{R_{\min}/B} \leq \dfrac{a_1}{a_2}$ , seul le canal $L_1$ sera utilisé. L'indicateur de qualité du canal $L_1$ devra toutefois vérifier $a_1 \geq \dfrac{2^{R_{\min}/B} - 1}{P_T^{\max}}$ faute de quoi le débit $R_{\min}$ ne pourra être acheminé par ce canal (zone à la droite de $D_1$), conformément à la contrainte (3-3).

De manière symétrique, si les indicateurs de qualité sont tels que $a_2 \geq a_1 2^{R_{\min}/B}$ (zone au-dessus de la droite $\Delta_2$ et incluant cette dernière), autrement dit si $2^{R_{\min}/B} \leq \dfrac{a_2}{a_1}$ , seul le canal $L_2$ sera utilisé. L'indicateur de qualité du canal $L_1$ devra alors vérifier $a_2 \geq \dfrac{2^{R_{\min}/B} - 1}{P_T^{\max}}$ faute de quoi le débit $R_{\min}$ ne pourra être acheminé par ce canal (zone au-dessus de $D_2$), conformément à la contrainte (3-3).

Lorsque $2^{R_{\min}/B} > \dfrac{a_1}{a_2} \geq 1$ (zone comprise entre la droite $\Delta_1$ et la bissectrice $\Delta$) ou bien $2^{R_{\min}/B} > \dfrac{a_2}{a_1} \geq 1$ (zone comprise entre la droite $\Delta_2$ et la bissectrice $\Delta$) les deux canaux $L_1$ et $L_2$ sont utilisés, la puissance de transmission sur le canal $L_1$ étant supérieure à celle du canal $L_2$ dans le premier cas et inférieure dans le second cas. Les indicateurs de qualité devront en outre vérifier $2 \left( \dfrac{2^{R_{\min}/B}}{a_1 a_2} \right)^{1/2} - \left( \dfrac{1}{a_1} + \dfrac{1}{a_2} \right) \leq P_T^{\max}$ , faute de quoi le débit $R_{\min}$ ne pourra être acheminé par ce canal composite (zone au-delà de la courbe C), conformément à la contrainte (3-3).

De manière plus générale, on peut montrer que pour un terminal mobile UE pouvant établir une liaison multiple sur une voie montante avec une pluralité $N$ de points d'accès, $SBS_i$ , $i = 1,...,N$ avec une même pluralité de canaux de transmission $L_i$, $i = 1,..., N$, les canaux de transmission étant indexés selon des valeurs décroissantes d'indicateur de qualité, autrement dit $a_1 \geq a_2 \geq ... \geq a_N$ , si la relation suivante est vérifiée :

$$2^{R_{\min}/B} > \frac{\prod_{i=1}^{N-1} a_i}{\left(a_N\right)^{N-1}} \tag{9}$$

la minimisation de la puissance émise sous contrainte de débit $R_{\min}$ sur la voie montante sera réalisée en transmettant sur chacun des canaux $L_i$ avec le débit $R_i$ et la puissance $p_i$ définies par :

$$R_i = \frac{1}{N}\left(R_{\min} + B\log_2\left(\frac{\left(a_i\right)^N}{\prod_{j=1}^{N} a_j}\right)\right) \tag{10-1}$$

$$p_i = \frac{2^{R_i/B}-1}{a_i} = \left(\frac{2^{R_{\min}/B}}{\prod_{j=1}^{N} a_j}\right)^{1/N} - \frac{1}{a_i} \tag{10-2}$$

La puissance totale émise sur la voie montante est alors :

$$P_T = N\left(\frac{2^{R_{\min}/B}}{\prod_{j=1}^{N} a_j}\right)^{1/N} - \sum_{j=1}^{N}\frac{1}{a_j} \tag{11}$$

étant entendu que la transmission ne peut avoir lieu que si $P_T \leq P_T^{\max}$.

Le choix du nombre de liaisons pour réaliser le débit $R_{\min}$ tout en minimisant la puissance d'émission est effectué en recherchant le plus petit entier $N^* \leq N$ tel que :

$$R_{\min} / B \leq \rho - N^* \log_2\left(a_{N^*+1}\right) \tag{12}$$

où $\rho = \sum_{j=1}^{N^*} \log_2\left(a_j\right)$, avec la convention $a_{N+1} = 0^+$ (de manière telle que la relation (12) soit nécessairement vérifiée).

Autrement dit, $N^* \leq N$ est l'entier unique vérifiant :

$$\frac{\prod_{i=1}^{N^*-1} a_i}{\left(a_{N^*}\right)^{N^*-1}} < 2^{R_{\min}/B} \leq \frac{\prod_{i=1}^{N^*} a_i}{\left(a_{N^*+1}\right)^{N^*}} \tag{13}$$

Les $N^*$ meilleurs canaux de transmission ayant été sélectionnés, l'allocation de débit et de puissance d'émission à ces canaux ($L_i$, $i = 1,..., N^*$) est réalisée selon le principe des expressions (10-1) et (10-2), c'est-à-dire :

$$R_i = \frac{1}{N^*}\left(R_{\min} + B\log_2\left(\frac{(a_i)^{N^*}}{\prod_{j=1}^{N^*} a_j}\right)\right) = \overline{R} + B\log_2(a_i) \qquad (14\text{-}1)$$

avec $\overline{R} = \frac{1}{N^*}\left(R_{\min} - B\rho\right)$ , et:

$$p_i = \left(\frac{2^{R_{\min}/B}}{\prod_{j=1}^{N^*} a_j}\right)^{1/N^*} - \frac{1}{a_i} \qquad (14\text{-}2)$$

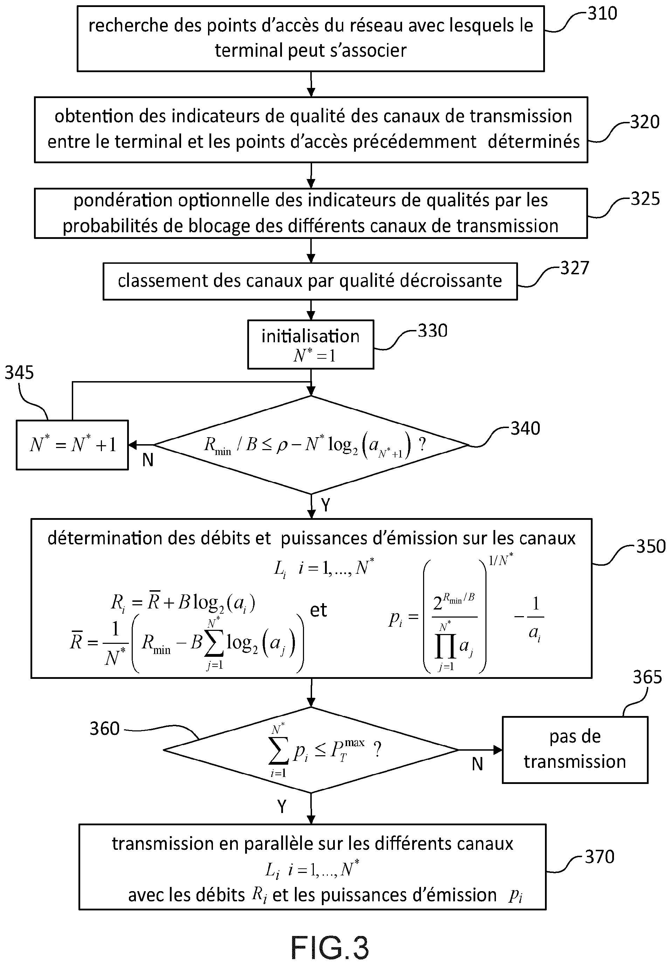

La Fig. 3 représente l'ordinogramme d'une méthode d'accès à un réseau au moyen d'une liaison multiple, selon un mode de réalisation de l'invention.

Dans une première étape 310, le terminal d'utilisateur (UE) recherche les points d'accès du réseau avec lesquels il peut s'associer.

Lorsque le terminal UE est un terminal mobile, la liste des points d'accès peut simplement résulter d'une phase classique de découverte du réseau.

Le cas échéant, le terminal peut déjà avoir reçu la liste des points d'accès avec leurs positions lors d'une première connexion avec le réseau. La liste peut avoir été fournie par le point d'accès associé lui-même ou par une autre entité du réseau.

Alternativement, le terminal peut avoir stocké en mémoire une liste de toutes les positions de points d'accès avec leurs identificateurs et sélectionner ensuite ceux dont il reçoit un signal de puissance supérieure à une valeur de seuil.

Selon une variante, lorsqu'il s'agit d'un réseau MEC, le terminal peut diffuser (*broadcast mode)* une requête de prise en charge d'une tâche calculatoire par le réseau, le cas échéant avec des caractéristiques de la tâche en question, telles que la latence maximale de calcul ou la puissance calculatoire requise. Seuls les points d'accès pouvant répondre à cette prise en charge (canaux de communication avec le terminal ne souffrant pas d'une situation blocage, proximité avec le terminal, liaison avec un serveur de calcul possédant les ressources calculatoires requises, etc.) répondent alors au terminal sous la forme d'un accusé de réception. Il convient de noter qu'une telle requête de prise en charge peut ne pas être systématiquement diffusée par le terminal : ainsi, si une tâche calculatoire doit être réitérée et que le terminal mobile ne s'est pas ou s'est peu déplacé, le terminal pourra supposer que la liste des points d'accès avec lesquels il peut établir une liaison n'a pas varié.

Selon une autre variante, le terminal peut mesurer les niveaux respectifs des signaux reçus (RSSI) des points d'accès environnants, le cas échéant dans plusieurs bandes de fréquence. Ce vecteur de RSSI est alors transmis au réseau qui peut renvoyer au terminal une estimation de sa position relative vis-à-vis des points d'accès environnants. Alternativement, les niveaux de RSSI peuvent être mesurés à partir des signaux reçus du terminal par les différents points d'accès. Ceux-ci centralisent ces niveaux pour effectuer une estimation de la position du terminal et lui transmettre cette estimation.

Lorsqu'il est transmis par le terminal, le vecteur de RSSI peut être accompagné d'une requête de prise en charge d'une tâche calculatoire, auquel cas le réseau ne renvoie au terminal mobile que la position relative vis-à-vis des points d'accès susceptibles de répondre à la requête en question.

Le cas échéant, les points d'accès pourront consulter une base de données contenant une cartographie des niveaux de RSSI associée à des listes de points d'accès. A partir de cette base et, le cas échéant, en fonction d'un critère portant sur la capacité calculatoire requise, le réseau fournira une liste des points d'accès susceptibles de répondre à la requête du terminal et la position relative du terminal vis-à-vis de ces derniers. La base de données pourra être construite au moyen d'une production participative (*crowd sourcing*) des terminaux.

La recherche de la liste de point d'accès pourra être aidée ou effectuée directement par un outil de prédiction (*machine learning*) entraînée de manière supervisée ou non sur la base de données.

D'autres variantes encore pourront être envisagées par l'homme du métier sans sortir du cadre de la présente invention.

En tout état de cause, le terminal dispose au terme de cette première étape d'une liste des points d'accès avec lesquels il est susceptible de pouvoir établir une liaison.

Dans une seconde étape, 320, le terminal obtient des indicateurs de qualité des canaux de transmission avec les points d'accès déterminés à l'étape précédente.

Ces indicateurs de qualité des canaux peuvent être obtenus de différentes manières.

Tout d'abord lorsqu'un canal de transmission est mono-trajet, autrement dit lorsque la matrice $\mathbf{H}_i\mathbf{H}_i^H$ est de rang 1 où $H_i$ est la matrice de taille $N_R \times N_T$ du canal de transmission $L_i$, l'indicateur de qualité du canal de transmission pourra être obtenu au moyen de :

$$a_i = \frac{|h_i|^2}{\sigma_{n,i}^2} \tag{15}$$

où $|h_i|^2$ est l'unique valeur propre non nulle de la matrice de la matrice $\mathbf{H}_i\mathbf{H}_i^H$ ($h_i$ n'étant autre que le coefficient complexe du signal sur le seul trajet du canal) $\sigma_{n,i}^2$ est la puissance de bruit sur le canal en question.

Si le canal n'est pas mono-trajet, on prendra en considération le trajet présentant la plus faible atténuation de puissance du signal, autrement dit la plus grande valeur propre de la matrice $\mathbf{H}_i\mathbf{H}_i^H$. L'indicateur de qualité du canal de transmission $L_i$ sera obtenu au moyen de $a_i = \frac{|h_i|^2}{\sigma_{n,i}^2}$ où $|h_i|^2$ est la valeur propre la plus élevée de $\mathbf{H}_i\mathbf{H}_i^H$.

Les indicateurs de qualité des canaux de transmission peuvent être calculés par les points d'accès à partir d'une estimation de canal, par exemple au moyen de symboles pilotes transmis (sans précodage) par le terminal. Dans le cas d'une requête de prise en charge d'une tâche calculatoire par un réseau MEC, une séquence de symboles pilotes pourra être transmise avec la requête.

Alternativement, le terminal pourra estimer les indicateurs de qualité des différents canaux à partir des distances le séparant des points d'accès correspondants. Les distances pourront être calculées par le terminal à partir de la position relative de ce dernier par rapport aux points d'accès, ou bien être transmises directement par ces points d'accès avec les accusés de réception au terminal.

Ainsi par exemple, si l'on note $d_i$ la distance séparant le terminal du point d'accès $AP_i$, l'indicateur de qualité pourra être estimé au moyen de :

$$a_i = \frac{a}{\sigma_{n,i}^2}\left(\frac{d_i}{d_{ref}}\right)^{-\alpha} \tag{16}$$

où $d_{ref}$ est une distance de référence, $\alpha$ est un réel positif dépendant du type d'environnement des points d'accès et $a$ est un coefficient positif sans dimension. On notera que $a_i$ est bien homogène à l'inverse d'une puissance comme dans l'expression (15).

Alternativement encore, les indicateurs de qualité pourront être quantifiés en plusieurs niveaux et être stockés dans la base de données avec la cartographie RSSI, lorsque celle-ci est implémentée. Là encore, un outil de prédiction pourra estimer les indicateurs de qualité quantifiés à partir des niveaux RSSI, après entraînement supervisé.

D'autres variantes d'obtention de ces indicateurs de qualité de canal pourront être envisagées par l'homme du métier sans sortir du cadre de la présente invention.

L'étape 325 est une étape optionnelle qui sera mise en œuvre en fonction de l'environnement du terminal. On pourra notamment se passer de cette étape lorsque cet environnement présente peu de risques d'être perturbé pendant la communication du terminal ou lorsque les indicateurs de qualité des canaux de transmission sont estimés/calculés avec une fréquence élevée au regard de la durée de stationnarité des canaux.

A cette étape, on évalue la probabilité de blocage des différents canaux de transmission. Cette probabilité dépend de l'environnement des points d'accès et décroit généralement selon une loi exponentielle au fur et à mesure que le terminal se rapproche d'un point d'accès. Ces probabilités de blocage peuvent avoir été évaluées préalablement par simulation (par exemple en fonction de la probabilité d'apparition d'un obstacle et de la distribution statistique de la taille de ces obstacles) et, le cas échéant, mises à jour en fonction des mesures des points d'accès.

Les indicateurs de qualité des canaux de transmission sont ensuite pondérés par les probabilités de blocage respectives de ces canaux :

$$\tilde{a}_i = \pi_i.a_i \qquad\qquad i = 1,..,N \qquad\qquad\qquad (17)$$

où $\pi_i$ est la probabilité de blocage du canal $L_i$ et $\tilde{a}_i$ son indicateur de qualité pondéré.

On supposera dans la suite de la description que les indicateurs de qualité ne sont pas pondérés. Toutefois il est clair que, lorsque pondération il y a, les indicateurs de qualité $a_i$ sont à remplacer par leurs équivalents pondérés, $\tilde{a}_i$.

A l'étape 327, on classe les canaux de transmission par qualité décroissante, autrement dit par valeurs décroissantes des indicateurs de qualité $a_i$ ou de leurs équivalents pondérés, $\tilde{a}_i$. On prend conventionnellement $a_{N+1} = 0^+$ (valeur positive arbitrairement faible).

A l'étape 330, on initialise à 1, le nombre optimal, $N^*$, de canaux pour établir une liaison multiple sur la voie montante.

On vérifie à l'étape 340, à partir du débit binaire minimal requis, $R_{min}$, et de la largeur de bande $B$, si la condition

$$2^{R_{\min}/B} \le \frac{\prod_{i=1}^{N^*} a_i}{\left(a_{N^*+1}\right)^{N^*}}$$

$R_{min} / B \le \rho \cdot N^* \log_2 (a_{N^*+1})$ est vérifiée ou de manière équivalente si                    .

Le débit binaire minimal $R_{min}$ peut être requis par une contrainte de qualité de service. Par exemple dans le cas d'un réseau MEC avec une contrainte de latence de calcul, le débit minimal sera préalablement calculé au moyen de :

$$R_{\min} = \frac{n_b}{(T_c - D_{rx} - w/f_s)} \qquad\qquad\qquad (18)$$

où $n_b$ est le nombre de bits à transférer au réseau pour exécuter la tâche, $T_c$ est la latence de calcul à respecter, $w$ est le nombre de cycle de CPU requis pour le calcul délégué au réseau, $f_s$ est la puissance du serveur de calcul exprimée en nombre cycles de CPU/s, et $D_{rx}$ est le temps nécessaire pour renvoyer le résultat du calcul au terminal sur la voie descendante.

Selon une première variante d'implémentation, le terminal transmet au réseau une requête ayant pour argument $n_b$ et $T_c$ (et éventuellement w si le réseau ne peut le déterminer lui-même d'après la nature de la tâche). Si le réseau ne peut exécuter la tâche en question dans le temps imparti, le point d'accès ne transmet pas d'accusé de réception (ou transmet un message de refus). En revanche, s'il est en mesure de le faire, il calcule le débit minimal $R_{min}$ sur la voie montante et le renvoie au terminal.

Selon une autre variante d'implémentation, le terminal a une connaissance préalable au moins approximative (voire des bornes de) $D_{rx}$ et $f_s$ et en déduit directement le débit minimal $R_{min}$ sur la voie montante.

D'autres variantes basées sur un protocole d'échange entre le terminal et le réseau pourront être envisagées sans sortir du cadre de la présente invention.

Lorsque la condition 340 n'est pas vérifiée, on incrémente $N^*$ en 345 puis l'on teste à nouveau la condition 340. Avec la convention $a_{N+1} = 0^+$, cette condition est vérifiée au plus tard pour $N^* = N$.

Lorsque la condition 340 est vérifiée, on calcule les débits $R_i$ et les puissances $p_i$, sur les différents canaux $L_i$, $i = 1,.., N^*$ à partir des expressions (14-1) et (14-2).

A l'étape 360, on vérifie si la puissance totale d'émission est compatible avec la puissance d'émission maximal

$$\sum_{i=1}^{N^*} p_i \le P_T^{\max}$$

du terminal, autrement dit si                    . Si ce n'est pas le cas, aucune transmission n'intervient., cf. 365. Dans le cas d'un réseau MEC par exemple, cela signifiera que le terminal devra lui-même effectuer la tâche calculatoire.

A l'inverse si la condition 360 est bien remplie, le terminal procède à une allocation de débit et de puissance pour transmettre sur les $N^*$ canaux de transmission sélectionnés à l'étape précédente.

Enfin à l'étape 370, le terminal transmet en parallèle les données binaires en les répartissant sur les différents canaux de transmission sélectionnés, $L_1,...,L_{N^*}$, respectivement avec les débits $R_i$, et les puissances, $p_i$, $i = 1,...,N^*$, calculés à l'étape précédente.

Dans le cas d'une application à un réseau MEC, lorsqu'un paquet de $n_b$ bits est à transmettre sur la voie montante avec le débit $R_{min}$, le terminal répartit les $n_b$ bits sur chacun des canaux de transmission $L_i$ , $i$ = 1,.., $N^*$ , chaque

$$n_i = n_b . \frac{R_i}{R_{min}}$$

canal de transmission transmettant un sous-paquet de taille .

Le choix des $N^*$ canaux de transmission, des débits $R_i$ et des puissances, $p_i$ sur ces canaux permet de minimiser la puissance d'émission du terminal tout en respectant la contrainte de qualité de service.

**Revendications**

1. Méthode d'accès d'un terminal d'utilisateur à un réseau comprenant une pluralité de points d'accès, ledit terminal pouvant établir (310) une liaison multiple sur la voie montante avec une pluralité $N$ de tels points d'accès au moyen d'une même pluralité de canaux de transmission, **caractérisée en ce que**, lorsque le terminal souhaite obtenir une qualité de service s'exprimant sous la forme d'un débit binaire minimal, $R_{min}$ , sur la voie montante, celui-ci:

   - obtient (320) un indicateur de qualité de canal, $a_i$, pour chaque canal $L_i$ de transmission de ladite pluralité, les canaux de transmission étant indexés par niveau de qualité décroissante à partir de leurs indicateurs de qualité respectifs ;
   - détermine (330,340,345) un nombre optimal de canaux de transmission, pour transmettre ledit débit binaire minimal, ledit nombre optimal étant obtenu comme le plus petit entier $N^* \leq N$ vérifiant $R_{min} / B \leq \rho - N^* log_2$

   $$\rho = \sum_{j=1}^{N^*} log_2 \left( a_j \right)$$

   $(a_{N^*+1})$ , où et sélectionne les canaux de transmission $L_1,..,L_{N^*}$ correspondant à ce nombre optimal et où $B$ est la largeur de bande utilisée pour la transmission ;
   - pour chacun des canaux de transmission sélectionnés à l'étape précédente, $L_i$, $i=1,...,N^*$, détermine (350) un

   $$\overline{R} = \frac{1}{N^*} \left( R_{min} - B\rho \right)$$

   débit binaire, $R_i$, au moyen de $\overline{R}+B log_2(a_i)$ avec et en déduit une puissance minimale, $p_i$, capable d'acheminer le débit binaire $R_i$ sur ce canal ;
   - lorsque la somme des puissances minimales sur les différents canaux est inférieure à une puissance maximale prédéterminée, transmet (370) en parallèle des données binaires en les répartissant sur les différents canaux de transmission sélectionnés $L_1,..,L_{N^*}$ respectivement avec les débits $R_i$ et les puissances $p_i$, $i =1,...,N^*$ , précédemment déterminées .

2. Méthode d'accès d'un terminal d'utilisateur à un réseau selon la revendication 1, **caractérisée en ce que** les indicateurs de qualité des canaux de transmission $L_i$, $i =1,...,N$, sont obtenus par $a_i = \frac{|h_i|^2}{\sigma_{n,i}^2}$ , où $|h_i|^2$ est la valeur

   propre la plus élevée de $\mathbf{H}_i \mathbf{H}_i^H$ , où $H_i$ est la matrice du canal de transmission $L_i$ et $\sigma_{n,i}^2$ est la puissance de bruit affectant le canal $L_i$.

3. Méthode d'accès d'un terminal d'utilisateur à un réseau selon la revendication 1, **caractérisée en ce que** les indicateurs de qualité des canaux de transmission $L_i$, $i =1,...,N$, sont obtenus par $a_i = \frac{a}{\sigma_{n,i}^2} \left( \frac{d_i}{d_{ref}} \right)^{-\alpha}$ où $d_i$ est la

   distance séparant le terminal du point d'accès sur le canal de transmission $L_i$, $\sigma_{n,i}^2$ est la puissance de bruit affectant le canal $L_i$, $d_{ref}$ est une distance de référence, $\alpha$ est un réel positif dépendant du type d'environnement du point d'accès et $a$ est un coefficient positif.

4. Méthode d'accès d'un terminal d'utilisateur à un réseau selon la revendication 2 ou 3, **caractérisée en ce que** les indicateurs de qualité des canaux de transmission sont pondérés par les probabilités de blocage respective de ces canaux.

**5.** Méthode d'accès d'un terminal d'utilisateur à un réseau selon la revendication 1, **caractérisée en ce que** le terminal mesure les niveaux de puissance des signaux reçus des points d'accès de ladite pluralité et les transmet au réseau, et que le réseau détermine, à partir de ces niveaux de puissance, les indicateurs de qualité des canaux de transmissions $L_i$, $i = 1,...,N$, entre le terminal et les différents points d'accès.

**6.** Méthode d'accès d'un terminal d'utilisateur à un réseau selon l'une des revendications précédentes, **caractérisée en ce que** le réseau est un réseau MEC comportant un serveur de calcul et que le terminal diffuse au réseau une requête d'exécution d'une tâche calculatoire avec un temps de latence de calcul maximal $T_c$, et que le débit binaire minimal, $R_{min}$, sur la voie montante est déterminé par $$R_{\min} = \frac{n_b}{(T_c - D_{rx} - w/f_s)}$$ où $n_b$ est le nombre de bits à transmettre par le terminal sur la voie montante pour l'exécution de la tâche calculatoire, $w$ est le nombre de cycles de calcul requis pour l'exécution de la tâche, $f_s$ est la puissance de calcul dudit serveur et $D_{rx}$ est le temps nécessaire pour transmettre le résultat de la tâche calculatoire au terminal sur la voie descendante.

**7.** Méthode d'accès d'un terminal d'utilisateur à un réseau selon la revendication 6, **caractérisée en ce que** seuls les points d'accès pouvant prendre en charge ladite requête d'exécution renvoient un accusé de réception au terminal, ladite pluralité $N$ de points d'accès étant alors constituée par ceux dont les accusés de réception ont été reçus par le terminal.

**8.** Méthode d'accès d'un terminal d'utilisateur à un réseau selon la revendication 6 ou 7, **caractérisée en ce que** le terminal répartit le paquet de $n_b$ bits à transmettre sur la voie montante sur chacun des canaux de transmission $L_i$, $i = 1,..,N^*$, chaque canal de transmission $L_i$ transmettant en parallèle un sous-paquet de taille $$n_i = n_b \cdot \frac{R_i}{R_{\min}}$$ .

**9.** Méthode d'accès d'un terminal d'utilisateur à un réseau selon l'une des revendications précédentes, **caractérisée en ce que** le réseau est un réseau hétérogène comprenant des macrocellules et des petites cellules, que les points d'accès sont des stations de base desdites petites cellules opérant dans la bande millimétrique.

**Patentansprüche**

**1.** Verfahren zum Zugriff eines Nutzerendgeräts auf ein Netz, das eine Vielzahl von Zugangspunkten umfasst, wobei das Endgerät eine Mehrfachverbindung auf der Aufwärtsstrecke mit einer Vielzahl N solcher Zugangspunkte mittels einer gleichen Vielzahl von Übertragungskanälen herstellen kann (310), **dadurch gekennzeichnet, dass** dann, wenn das Endgerät eine Dienstqualität erhalten möchte, die sich in Form einer minimalen Bitrate $R_{min}$ auf der Aufwärtsstrecke ausdrückt, dieses Endgerät

- für jeden Übertragungskanal $L_i$ aus der genannten Vielzahl einen Kanalqualitätsindikator $a_i$ erhält (320), wobei die Übertragungskanäle anhand ihrer jeweiligen Qualitätsindikatoren nach abnehmendem Qualitätsniveau indiziert werden;
- eine optimale Anzahl von Übertragungskanälen bestimmt (330, 340, 345), um die minimale Bitrate zu übertragen, wobei die optimale Anzahl als die kleinste ganze Zahl $N^* \leq N$ erhalten wird, die $R_{min} / B \leq \rho - N^* \log_2 (a_{N^*+1})$ erfüllt, wobei $\rho = \sum_{j=1}^{N*} log_2(a_j)$, und diejenigen Übertragungskanäle $L_1, ..., L_N$ auswählt, die dieser optimalen Anzahl entsprechen, und wobei $B$ die zur Übertragung verwendete Bandbreite ist;
- für jeden der im vorherigen Schritt ausgewählten Übertragungskanäle $L_i$, $i = 1, ..., N^*$, eine Bitrate $R_i$ mittels $\bar{R} + B \log_2 (a_i)$ mit $\bar{R} = \frac{1}{N^*} (R_{min} - B\rho)$ bestimmt (350) und daraus eine minimale Leistung $p_i$ ableitet, mit der die Bitrate $R_i$ über diesen Kanal weitergeleitet werden kann;
- dann, wenn die Summe der minimalen Leistungen auf den verschiedenen Kanälen kleiner als eine vorbestimmte maximale Leistung ist, parallel binäre Daten überträgt (370), indem diese auf die verschiedenen aus-

gewählten Übertragungskanäle $L_1$, ..., $L_N$ mit den zuvor bestimmten jeweiligen Bitraten $R_i$ und Leistungen $p_i$, $i$ = 1, ..., $N^*$ verteilt werden.

2.  Verfahren zum Zugriff eines Nutzerendgeräts auf ein Netz nach Anspruch 1, **dadurch gekennzeichnet, dass** die Qualitätsindikatoren der Übertragungskanäle $L_i$, $i$ = 1, ..., N, durch $a_i = \frac{|h_i|^2}{\sigma_{n,i}^2}$ erhalten werden, wobei $|h_i|^2$ der höchste Eigenwert von $H_i H_i^H$ ist, wobei $H_i$ die Matrix des Übertragungskanals $L_i$ ist und $\sigma_{n,i}^2$ die den Kanal $L_i$ beeinflussende Rauschleistung ist.

3.  Verfahren zum Zugriff eines Nutzerendgeräts auf ein Netz nach Anspruch 1, **dadurch gekennzeichnet, dass** die Qualitätsindikatoren der Übertragungskanäle $L_i$, $i$ = 1, .... N, durch $a_i = \frac{a}{\sigma_{n,i}^2} \left( \frac{d_i}{d_{ref}} \right)^{-\alpha}$ erhalten werden, wobei $d_i$ die Entfernung zwischen dem Endgerät und dem Zugangspunkt auf dem Übertragungskanal $L_i$ ist, $\sigma_{n,i}^2$ die den Kanal $L_i$ beeinflussende Rauschleistung ist, $d_{ref}$ eine Referenzentfernung ist, $\alpha$ eine positive reelle Zahl ist, die von der Art der Umgebung des Zugangspunkts abhängt, und a ein positiver Koeffizient ist.

4.  Verfahren zum Zugriff eines Nutzerendgeräts auf ein Netzwerk nach Anspruch 2 oder 3, **dadurch gekennzeichnet, dass** die Qualitätsindikatoren der Übertragungskanäle mit den jeweiligen Blockierungswahrscheinlichkeiten dieser Kanäle gewichtet werden.

5.  Verfahren zum Zugriff eines Nutzerendgeräts auf ein Netz nach Anspruch 1, **dadurch gekennzeichnet, dass** das Endgerät die Leistungspegel der von den Zugangspunkten der genannten Vielzahl empfangenen Signale misst und sie an das Netz überträgt und dass das Netz anhand dieser Leistungspegel die Qualitätsindikatoren der Übertragungskanäle $L_i$, i = 1, ..., $N$, zwischen dem Endgerät und den verschiedenen Zugangspunkten bestimmt.

6.  Verfahren zum Zugriff eines Nutzerendgeräts auf ein Netz nach einem der vorhergehenden Ansprüche, **dadurch gekennzeichnet, dass** das Netz ein MEC-Netz mit einem Rechenserver ist und dass das Endgerät eine Anforderung zur Ausführung einer Rechenaufgabe mit einer maximalen Rechenlatenzzeit $T_c$ an das Netz sendet und dass die minimale Bitrate R$_{min}$ auf der Aufwärtsstrecke durch $R_{min} = \frac{n_b}{(T_c - D_{rx} - w/f_s)}$ bestimmt wird, wobei $n_b$ die Anzahl der Bits ist, die vom Endgerät auf der Aufwärtsstrecke zur Ausführung der Rechenaufgabe zu übertragen sind, w die Anzahl der Rechenzyklen ist, die zur Ausführung der Aufgabe erforderlich sind, $f_s$ die Rechenleistung des genannten Servers ist und $D_{rx}$ die Zeit ist, die erforderlich ist, um das Ergebnis der Rechenaufgabe auf der Abwärtsstrecke zum Endgerät zu übertragen.

7.  Verfahren zum Zugriff eines Nutzerendgeräts auf ein Netz nach Anspruch 6, **dadurch gekennzeichnet, dass** nur die Zugangspunkte, die die Ausführungsanforderung übernehmen können, eine Empfangsbestätigung an das Endgerät zurücksenden, wobei die Vielzahl N von Zugangspunkten dann aus denjenigen besteht, deren Empfangsbestätigungen vom Endgerät empfangen wurden.

8.  Verfahren zum Zugriff eines Nutzerendgeräts auf ein Netz nach Anspruch 6 oder 7, **dadurch gekennzeichnet, dass** das Endgerät das auf der Aufwärtsstrecke zu übertragende Paket von $n_b$ Bits auf jeden der Übertragungskanäle $L_i$ i = 1, ..., $N^*$, verteilt, wobei jeder Übertragungskanal $L_i$ parallel ein Teilpaket der Größe $n_i = n_b \cdot \frac{R_i}{R_{min}}$ überträgt.

9.  Verfahren zum Zugriff eines Nutzerendgeräts auf ein Netz nach einem der vorhergehenden Ansprüche, **dadurch gekennzeichnet, dass** das Netz ein heterogenes Netz ist, das Makrozellen und kleine Zellen umfasst, und dass die Zugriffspunkte Basisstationen der kleinen Zellen sind, die im Millimeter-Band arbeiten.

**Claims**

1.  A method for a user terminal to access a network comprising a plurality of access points, said terminal being able to establish (310) a multi-link on the uplink with a plurality $N$ of such access points by means of a same plurality of transmission channels, **characterised in that**, when the terminal wishes to obtain a quality of service expressed in the form of a minimum bitrate, $R_{min}$, on the uplink, this terminal:

    - obtains (320) a channel quality indicator, $a_i$, for each transmission channel $L_i$ of said plurality, the transmission channels being indexed by decreasing quality level from their respective quality indicators;
    - determines (330,340,345) an optimal number of transmission channels, for transmitting said minimum bitrate, said optimal number being obtained as the smallest integer $N^* \leq N$ satisfying $R_{min} / B \leq \rho - N^* \log_2(a_{N^*1})$, where

    $$\rho = \sum_{j=1}^{N^*} \log_2(a_j)$$

    and selects the transmission channels $L_1,..,L_{N^*}$ corresponding to this optimal number and where $B$ is the bandwidth used for the transmission;
    - for each of the transmission channels selected in the previous step, $L_i$, $i=1,...,N^*$, determines (350) a bitrate,

    $$\overline{R} = \frac{1}{N^*}(R_{min} - B\rho)$$

    $R_i$, by means of $\overline{R}+B\log_2(a_i)$ with $\overline{R}$ and deduces a minimum power, $p_i$ therefrom, capable of delivering the bitrate $R_i$ on this channel;
    - when the sum of the minimum powers on the different channels is less than a predetermined maximum power, transmits (370) binary data in parallel by distributing them on the different transmission channels selected $L_1,..,L_{N^*}$ respectively with the bitrates $R_i$, and the powers $p_i$, $i = 1,..., N^*$, previously determined.

2.  The method for a user terminal to access a network according to claim 1, **characterised in that** the quality indicators of the transmission channels $L_i$, $i =1,...,N$, are obtained by $a_i = \dfrac{|h_i|^2}{\sigma_{n,i}^2}$, where $|h_i|^2$ is the highest eigenvalue of $\mathbf{H}_i\mathbf{H}_i^H$, where $H_i$ is the matrix of the transmission channel $L_i$ and $\sigma_{n,i}^2$ is the noise power affecting the channel $L_i$.

3.  The method for a user terminal to access a network according to claim 1, **characterised in that** the quality indicators of the transmission channels $L_i$, $i = 1,...,N$, are obtained by $a_i = \dfrac{a}{\sigma_{n,i}^2}\left(\dfrac{d_i}{d_{ref}}\right)^{-\alpha}$ where $d_i$ is the distance separating the terminal from the access point on the transmission channel $L_i$, $\sigma_{n,i}^2$ is the noise power affecting the channel $L_i$ , $d_{ref}$ is a reference distance, $\alpha$ is a positive real number depending on the type of environment of the access point and a is a positive coefficient.

4.  The method for a user terminal access to a network according to claim 2 or 3, **characterised in that** the quality indicators of the transmission channels are weighted by the respective outage probabilities of these channels.

5.  The method for a user terminal to access a network according to claim 1, **characterised in that** the terminal measures the power levels of the signals received from the access points of said plurality and transmits them to the network, and that the network determines, from these power levels, the quality indicators of the transmission channels $L_i$, $i= 1,...,N$, between the terminal and the various access points.

6.  The method for a user terminal to access a network according to one of the preceding claims, **characterised in that** the network is a MEC network including a computing server and that the terminal broadcasts to the network a request to execute a computational task within a maximum computing latency time $T_c$, and that the minimum bitrate,

$$R_{\min} = \frac{n_b}{(T_c - D_{rx} - w/f_s)}$$

$R_{\min}$, on the uplink is determined by where $n_b$ is the number of bits to be transmitted by the terminal on the uplink for the execution of the computational task, w is the number of computing cycles required for the execution of the task, $f_s$ is the computing power of said server and $D_{rx}$ is the time necessary to transmit the result of the computational task to the terminal on the downlink.

7. The method for a user terminal to access a network according to claim 6, **characterised in that** only the access points that can support said execution request send an acknowledgement message to the terminal, said plurality N of access points then being constituted by those whose acknowledgement messages have been received by the terminal.

8. The method for a user terminal to access a network according to claim 6 or 7, **characterised in that** the terminal distributes the packet of $n_b$ bits to be transmitted on the uplink on each of the transmission channels $L_i$, i = 1,..,N*,

$$n_i = n_b . \frac{R_i}{R_{\min}}$$

each transmission channel $L_i$ transmitting in parallel a sub-packet of a size .

9. The method for a user terminal to access a network according to one of the preceding claims, **characterised in that** the network is a heterogeneous network comprising macrocells and small cells, that the access points are base stations of said small cells operating in the millimetre band.

FIG.1

FIG.2

recherche des points d'accès du réseau avec lesquels le terminal peut s'associer — 310

obtention des indicateurs de qualité des canaux de transmission entre le terminal et les points d'accès précédemment déterminés — 320

pondération optionnelle des indicateurs de qualités par les probabilités de blocage des différents canaux de transmission — 325

classement des canaux par qualité décroissante — 327

initialisation
$N^* = 1$ — 330

345
$N^* = N^* + 1$ ← N — $R_{min} / B \leq \rho - N^* \log_2 \left( a_{N^*+1} \right)$ ? — 340

Y

détermination des débits et puissances d'émission sur les canaux — 350
$L_i \quad i = 1, ..., N^*$

$R_i = \overline{R} + B \log_2(a_i)$ et $p_i = \left( \dfrac{2^{R_{min}/B}}{\prod\limits_{j=1}^{N^*} a_j} \right)^{1/N^*} - \dfrac{1}{a_i}$

$\overline{R} = \dfrac{1}{N^*} \left( R_{min} - B \sum\limits_{j=1}^{N^*} \log_2 \left( a_j \right) \right)$

360 — $\sum\limits_{i=1}^{N^*} p_i \leq P_T^{max}$ ? — N → pas de transmission — 365

Y

transmission en parallèle sur les différents canaux — 370
$L_i \quad i = 1, ..., N^*$
avec les débits $R_i$ et les puissances d'émission $p_i$

FIG.3

**RÉFÉRENCES CITÉES DANS LA DESCRIPTION**

**Littérature non-brevet citée dans la description**

- **S. BARBAROSSA et al.** Enabling effective mobile edge computing using millimeter wave links. *Proc. of IEEE International Conférence on Communications Workshops (ICC Workshops),* 21 Mai 2017, 1-6